Europäisches Patentamt

(19) European Patent Office

Office européen des brevets

(11) Publication number : **0 470 054 A2**

(12) **EUROPEAN PATENT APPLICATION**

(21) Application number : **91830297.7**

(51) Int. Cl.⁵ : **G01T 1/178**

(22) Date of filing : **03.07.91**

(30) Priority : **04.07.90 IT 3588190 U**

(43) Date of publication of application :
**05.02.92 Bulletin 92/06**

(84) Designated Contracting States :
**AT BE CH DE DK ES FR GB GR LI LU NL SE**

(71) Applicant : **ENTE PER LE NUOVE
TECNOLOGIE, L'ENERGIA E L'AMBIENTE (
ENEA)
125 Viale Regina Margherita
I-00198 Roma RM (IT)**

(72) Inventor : **Bovi, Maurizio
Via Pietro Nenni 12
I-00061 Anguillara Sabazia Rome (IT)**
Inventor : **Baldassini, Pier Guiseppe
Piazza Pratoterra 73
I-00062 Bracciano Rome (IT)**
Inventor : **Porcu, Innocenzo
Via Leone Tolstoi snc
I-00061 Anguillara Sabazia Rome (IT)**

(74) Representative : **Sarpi, Maurizio
Studio FERRARIO Via Collina, 36
I-00187 Roma (IT)**

(54) **Radon monitoring diffusion device.**

(57)    A diffusion monitoring device for measuring the radon concentration is disclosed, including in combination a scintillation cell of small volume (about 100 cm³) provided with a filter and a light screen, a multiplier phototube directly connected to said cell, and an electronic data processing unit connected to said multiplier phototube through a coaxial cable.

EP 0 470 054 A2

FIG. 1

The present invention relates to a monitoring diffusion device for measuring the concentration of gas radon in closed rooms like mines, thermal baths, houses, cellars, underground cavities and the like.

The invention seeks to provide a compact instrument of simple design and practical use which allows the concentration of radon to be measured without causing disturbances in the measurement environment, especially in the small underground cavities of the order of about 100 cm$^3$ at the depth of about 1 meter.

As well known the main source of radon is located in the subsoil. The radon radioactivity levels in the houses and the exposure of the dwellers depend both on the building materials (walls, floors, paints, a.s.o.) and mainly on the subsoil of the site where the house is located (rocky formations, water beds, cracks, cavities, a.s.o.). Accordingly, the measurements relative to the subsoil are of particular importance.

All measuring devices known at present and providing the air suction are not adapted to sample the underground cavities. Actually, they would cause disturbances in the measurement environment, whereby the suction would cause not only a vacuum in the cavity but would also make it difficult to carry out a continuous measurement in such cavity. Moreover the sampling needs large volumes, which causes the radioactivity levels to vary continuously.

Instruments using scintillation detectors (Lucas's cells) are mainly based upon the limited or continuous, forced air suction from the environment, and further suffer from a number of drawbacks such as triboluminescence, large dimensions and early degradation of the zinc sulfide.

Instruments based upon the diffusion measurement system such as silicon detector ("Radon Monitor" of the firm SEE 373; "Digital Radon Monitor Sistems" of the firm Victoreen) are at present on the market intended to monitoring the environmental radon concentration.

Instruments of such type, however, cannot be used to effect radon concentration measurements in the subsoil under the requested conditions. Instruments using diffusion silicon detectors have a number of drawbacks, among which the large dimensions preventing them from being used in the subsoil, and the need of an electric field produced by a voltage source of about 3000 V applied to the sensing head of the detector. This is cause of a lot of problems of insulation especially against humidity if the instrument should be used for long measuring times in locations where the humidity levels are critical such as in the subsoil, mines, thermal baths.

On the other hand, if the bias voltage is suppressed in the sensing head, the sensitivity of the instrument would be considerably reduced in spite of the large dimensions.

A passive monitoring device, Model PRD-1, is traded by the firm Pylon. Even if it makes use of a scintillation detector, it is not adapted to carry out the requested measurement. Actually its construction is such that measurements in the subsoil cannot be carried out. The main difference with respect to the device according to the invention is that the multiplier phototube is not assembled together with the scintillation cell. In fact model PRD-1 consists exclusively of a cell having a volume of 275 ml, which cannot allow measurements of the radon concentration to be carried out continuously under the same operating conditions.

The cell is filled with the air from the environment in a passive manner through four inlet holes formed in the base surface. After a certain time which is needed to fill the cell, the latter is introduced into an other instrument (model AB-5) containing the multiplier phototube and the associated electronic circuits to count all scintillations produced by radon within the cell.

In order to carry out next measurements with the instruments under the same operating conditions (filling the cell in a passive manner) the above described operation should be repeated: putting the cell (model PRD-1) into communication with the environment to be measured again and, after its filling, placing the cell into the instrument AB-5 to carry out a second measurement.

According to the present invention there is provided a measurement device based upon the natural diffusion of radon between the environment in which the measurement is to be carried out and a scintillation cell of small dimensions (about 100 cm$^3$).

The teaching of the present invention is based both upon the optimization of the dimensions of cell and of radon inlet/outlet hole, and the assembling of the multiplier phototube together with the scintillation cell. This allows:

a) continuous measurements to be carried out under the same operating conditions (diffusion) without modifying the measurement system and without varying the number of measurements to be carried out;

b) measurements in succession to be carried out without varying the setting of the instrument as the latter can be designed so as to automatically measure, process and store the values of all programmed measurements.

Unlike any other similar instruments on the market the cell of the device according to the invention is provided with a large opening corresponding to one of the bases of the cylindrical body. A filter is applied to that opening to prevent the particles from entering the cell. A labyrinth light screen can also be applied to the same opening.

The dimensions of the scintillation cell and the inlet/outlet hole are such as to allow:

a) continuous measurements of the radon concentration to be carried out in short time even under varying conditions of radioactivity levels. The continuous measurements allow variations in the radon concentration to be detected in time intervals longer than 30 minutes. In fact a certain time is requested in order that the gas subjected to physical diffusion processes reaches the equilibrium between the inside and the outside of the cell in suitable short time;

b) the measuring instrument to be introduced into small subsoil cavities for carrying out continuous measurements in a volume of about 1.000 cm³ comparable with that of the scintillation cell;

c) the error due to the phenomenon of the active deposit on the walls of the scintillaion cell to be minimized. In addition, the latter is placed within the instrument in a vertical position with the filter on the bottom so that the decay products are mainly deposited on the inner surface of the filter (i.e. on the bottom of the cell) under the action both of the laminar flow and the gravity. However, it should be noted that the generation of an electric field at regular intervals (a short time after each measurement) between the cylindrical surface of the cell and a collector electrode within the cell causes said electrode to attract any radioactive particulate matter deposited on the walls so as to effect a "cleaning of the cell".

The device according to the invention besides the measurements described above lends itself to further measurements in any other environment with a radon concentration higher than 100 Bq m⁻³. It is provided with a black filter allowing the instrument to be used also in bright rooms, thus avoiding the problems of the sensitivity of the system to the light.

The main features of the device are as follows:

– measuring range from about 100 to 900.000 Bq m⁻³;

– reproducibility of the measurement, 3%;

– response time of the instrument, 30 minutes;

– detection of the radon concentration variations at intervals longer than 30 minutes;

– the measurement can be carried out where humidity and temperature are critical as the measuring instrument is not deteriorated;

– functional capacity and compactness due both to the cylindrical form and the small dimensions (height about 25 cm; width about 7 cm).

The present invention will now be described with reference to the annexed drawing showing a preferred embodiment of the invention. In the drawing:

Fig. 1 is a schematic axial section view of the measuring instrument;

Figs. 1A and 1B show a plan and a perspective wiew of the labyrinth device to be applied to the filter as a screen closing the opening of the scintillation cell, respectively;

Fig. 1C shows the general diagram of the electronic circuit associated to the instrument;

Figs. 2 to 6 show several diagrams of measurements and the relative comparison with known systems.

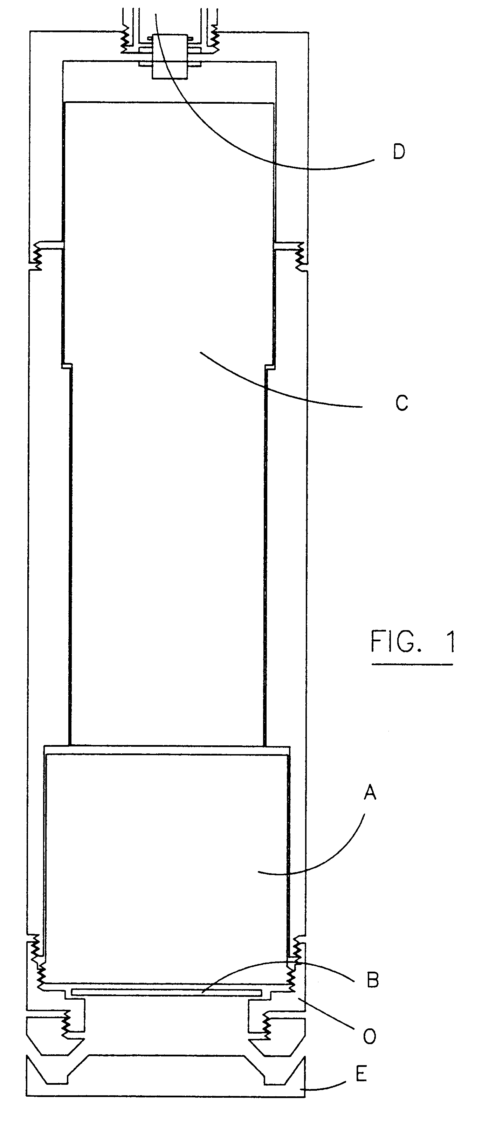

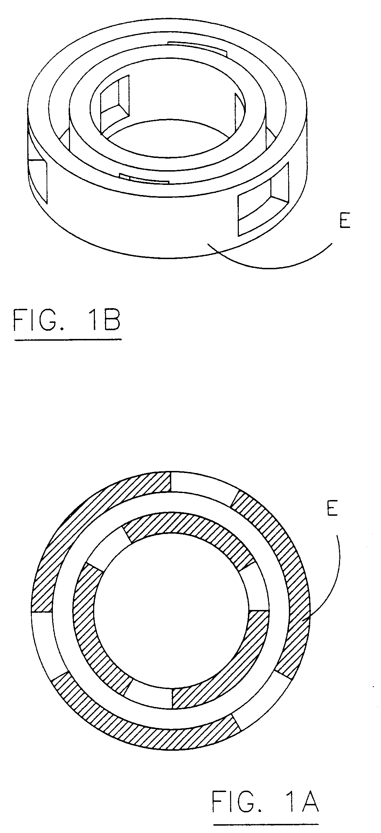

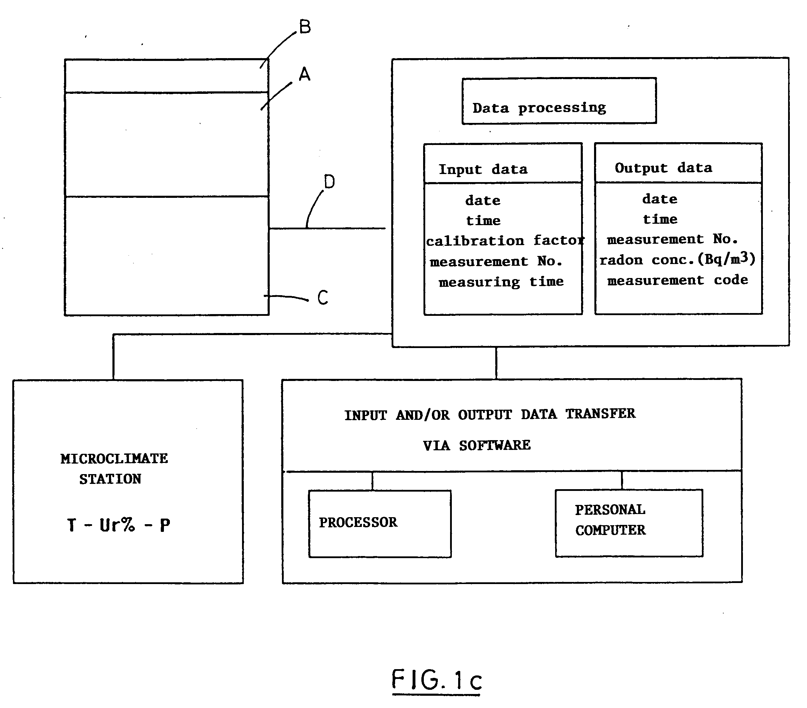

With reference to Fig. 1 the device consists of a scintillation cell A made of plastic material of the type "perspex" (registered trademark) with inner walls completely lined with a layer of zinc sulfide. Cell A of cylindrical form has a volume of about 100 cm³ (overall dimensions: diameter about 6 cm, height about 5 cm). One of the base surfaces of the cylinder is opened and provided with a filter B preventing aerosol from entering the cell and allowing the radon to pass from the outside to the inside of the cell and viceversa.

The use of a grey filter of the commercial type allows measurements in rooms with low brightness.

In rooms where the intensity of the light is very high the measuremnt is carried out by using a labyrinth device E which can be screwed to the threaded periphery of the filter holder O at the outside of filter B. Such device causes, however, a delay in the measurement.

When the humidity assumes a critical value, water-repellant filters (made of teflon) provided or not with the labyrinth device can be used according to the brightness of the room.

A multiplier phototube C adapted to zinc sulfide detector and having a diameter of about 53 mm and height not greater than 150 mm is connected to and integral with the cell A.

The above described device is associated through the coaxial cable D to an electronic measuring assembly provided with a programmable microprocessor (Fig. 1C) performing the following functions:

– storing data from the multiplier phototube and programming the time intervals between single measurements from 15 to 60 minutes, and the number of the measurements in succession;

storing on internal storage or bulk memory the single measurements and all utility data (date, time, calibration factor, and microclimate parameters);

– processing data;

– transferring data to the processor and/or printer at the end of any measurement and/or at the end of the series of measurements.

The instrument is supplied at 220 V - 50 Hz and is provided with buffer batteries to extend its use also to sites without power supply, and is housed into a case suitably protected from dust and rain.

In view of the foregoing a number of advantageous features are apparent, among which the following is to be pointed out:

I- Both single and continuous measurements of the radon concentration in the small cavities of the subsoil can be carried out, and the variations of such concentrations can be related to the different climate parameters and others (temperature, pressure, humidity, type of subsoil, a.s.o.) without the small volume of air is subjected to modifications such as to alter the measurement.

II- Both single and continuous measurements of the radon concentration in closed rooms (houses, cellars, caves, mines, thermal baths, a.s.o.) where the concentration of radon is higher than 100 Bq m$^{-3}$ can be carried out.

III- The dynamic of the radon concentration in the room can be detected at minimum time intervals of 30 minutes.

IV- Self-contained power system to allow continuous measurements to be carried out by programming the number and the time of the measurements (from 15 to 60 minutes for each measurement).

V- Storing the processed data directly into an internal storage and/or bulk memory with the possibility of transferring immediately or later such data to the central processing unit of larger processors.

VI- Storing during the measurement the environmental parameters (temperature, pressure, relative humidity, %) by providing suitable sensors such as to relate the results of the measurements to the standard values of the above parameters.

VII- The calibration of the instrument is effected by means of simple accessories without using any complex experimental apparatus such as the radon chamber.

The device according to the invention has been subjected to several tests. The obtained values have been compared with the reference values of the scintillation cells of the firm Eberline which are typically used in the Environment Measuring Laboratory. Such tests are aiming at controlling the capacity of the instrument in order to determining its application field.

Some test has been accomplished by using the radon chamber in order to reach both constant and variable radioactivity levels.

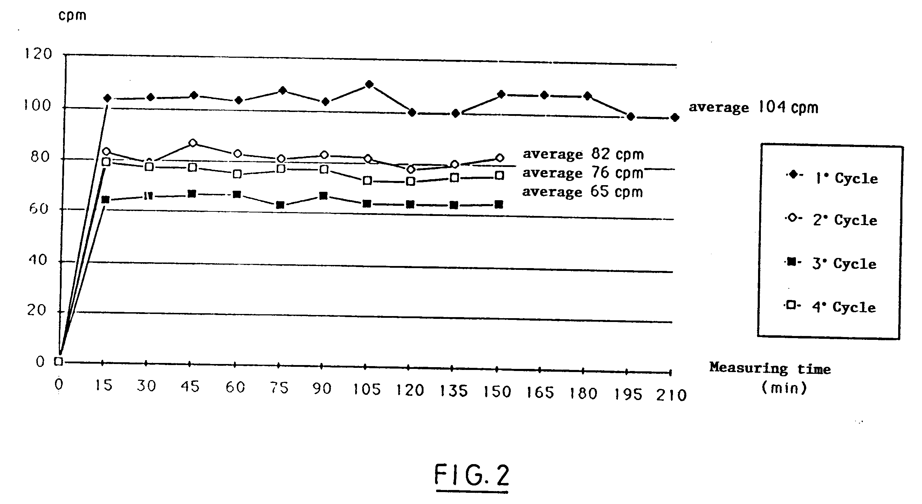

In Fig. 2 the values of four different measuring cycles carried out each at constant concentration are shown. The measurements are expressed in counts per minute (cpm), thus allowing the reproducibility of the measurements within 2-3% to be checked. In Table 1 below there is shown the average radon concentrations of the four measuring cycles accomplished with cells Eberline and with the diffusion monitoring system of the present invention, respectively.

## TABLE 1

Comparison between the measurements provided by the diffusion monitor and shown in Fig. 2 with those provided by cells Eberline at the same radon concentration levels.

Average radon concentration (kBq m$^{-3}$)

| Cycle No. | Eberline cell (V = 1400 cm$^3$) | Diffusion monitor (*) (V = 100 cm$^3$) |
|---|---|---|
| 1 | $7.8 \pm 0.2$ | $7.8 \pm 0.2$ |
| 2 | $6.0 \pm 0.2$ | $6.2 \pm 0.2$ |
| 3 | $5.6 \pm 0.4$ | $5.8 \pm 0.2$ |
| 4 | $4.3 \pm 0.4$ | $4.8 \pm 0.2$ |

(*) Note: the values relative to the diffusion monitor are expressed in kBq m$^{-3}$ by using an experimental calibration factor determined through standard sources (firm Pylon).

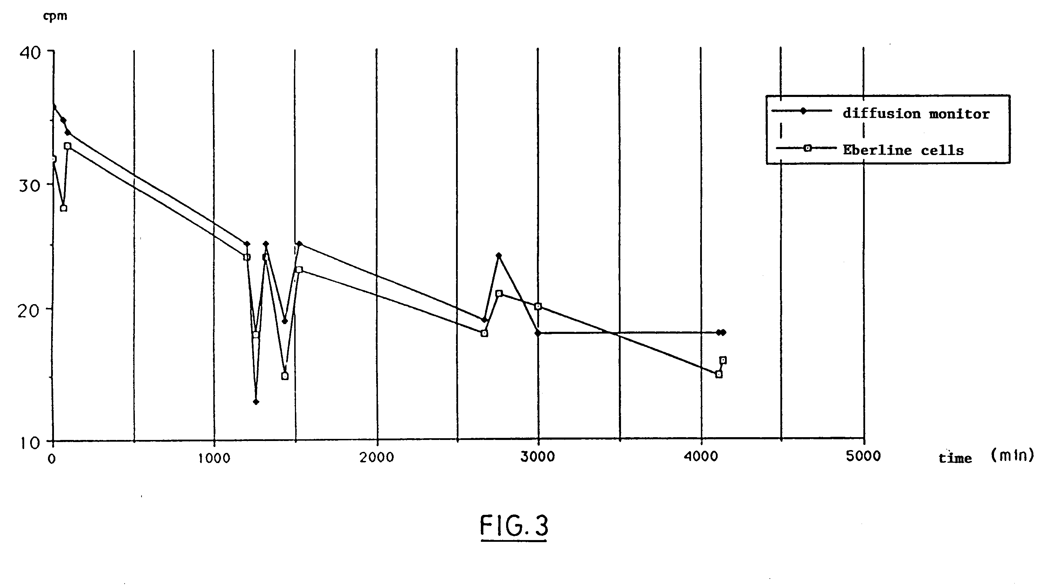

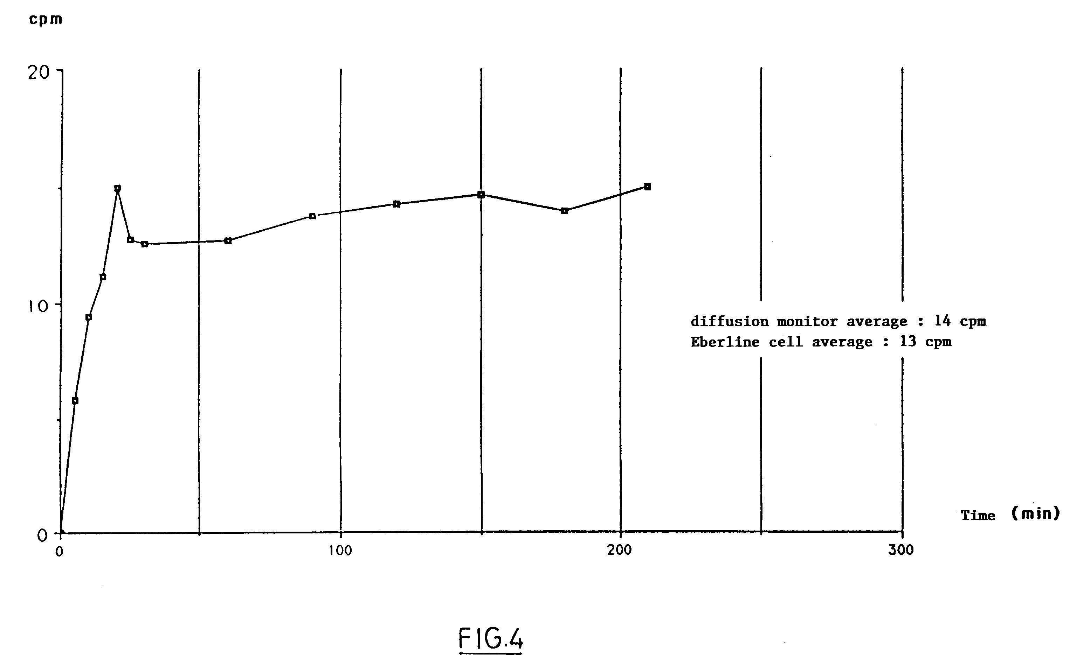

The response of the described device to the temporary variations of the radon concentration has been checked by means of a different set of measurements. In Fig. 3 the measurements effected in a radon chamber at the presence of activated carbon are shown. The typical effects of the activated carbon such as the absorption and the releasing of the radon have caused the radioactive concentration to vary, thus allowing the diffusion monitor to be subjected to a sensitivity test for short variations of the radioactivity. The results show that the instrument follows with optimal precision the dynamic of the variations occurring in a time longer than 15-30 minutes. The counts corresponding to the effected measurements are reached by the instrument after a time of 20 minutes (Fig. 4). Accordingly, when the radon concentration is variable, the measurements effected at minimum intervals of 30 minutes are reliable.

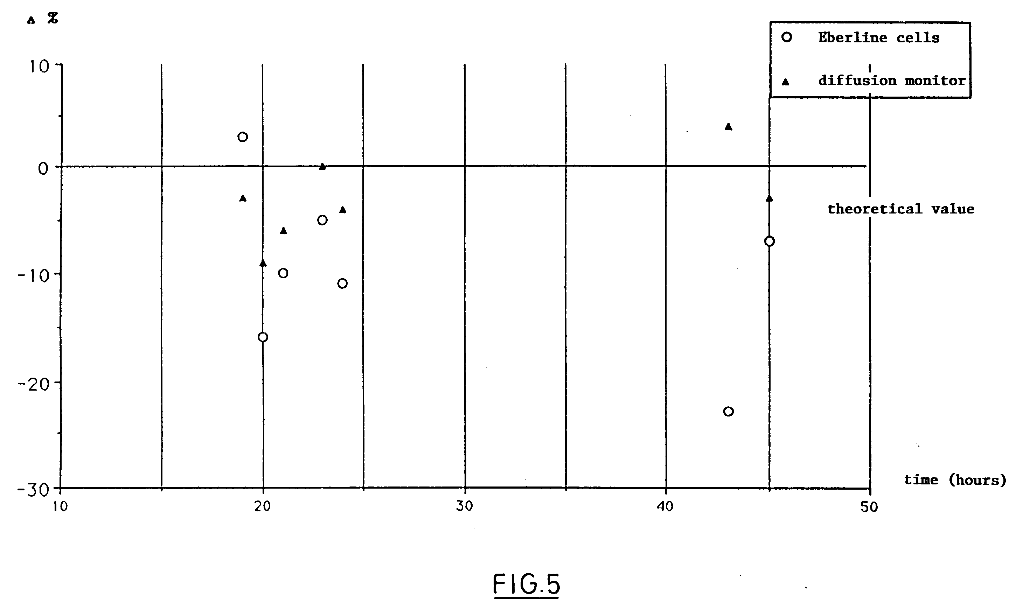

In Fig. 5 the respective values measured by means of Eberline's scintillation cells and by the diffusion monitor according to the present invention are compared as far as the theoretical decay curve of the radon within the room is concerned. The results point out a greater precision of the diffusion monitor. In fact the diffusion instrument and the Eberline cells have a delta varying from 0,04% to 9% and from 3% to 23%, respectively.

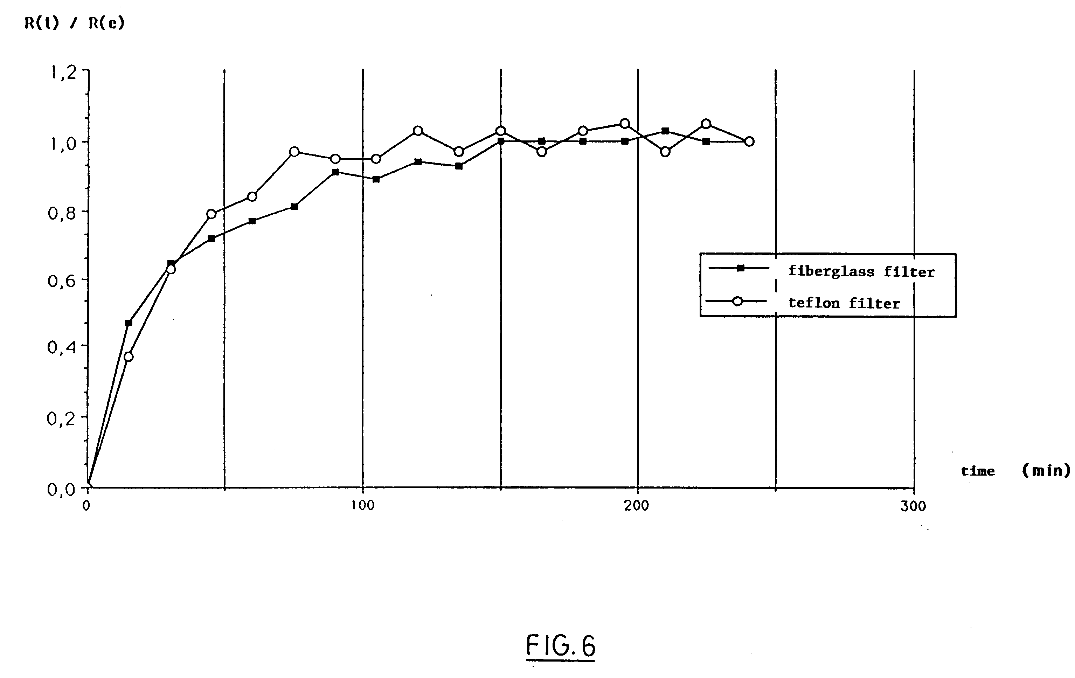

The material and the diameter of the filter pores were proved to change the response time of the instrument. In Fig. 6 two measuring cycles are shown. In the first cycle a filter of the Company Sartorius made of water-repellant teflon with a pore diameter of 0,045 m was used. In the second measuring cycle an absolute filter of the Company Whatman made of glass borosilicate microfibres, pressed in a matrix, bound by acrylic resin, and having a higher holdup capacity than a diaphragm filter was used. The results prove that the first measurement is obtained after 60 minutes with a teflon filter and after 150 minutes, i.e. twice as much, with a microfibre filter.

**Claims**

1. A diffusion monitoring device for the measurement of the radon concentration in closed rooms, characterized in that it is comprised, in combination, of a small-size sampling cell directly coupled to a multiplier phototube adapted to zinc sulfide detectors, and an electronic data processing unit.

2. The device of claim 1, characterized in that said sampling cell is a scintillation cell of cylindrical form, the lower base of which is opened downwards and the upper end is adjacent to the multiplier phototube.

3. The device of claims 1 and 2, characterized in that the open base of the cell is provided with a threaded peripheric edge to which a filter holder can be screwed, said filter preventing the particulate matter from entering the cell so that only radon is allowed to pass from the outside to the inside of the cell and viceversa.

4. The device of claims 1 to 3, characterized in that a labyrinth device can be screwed to said filter holder for preventing the light from entering the cell.

5. The device of claims 1 to 4, characterized in that said scintillation cell is made of plastic material, for example "perspex" or other technologically suitable material having a lining of zinc sulfide on the inner walls.

6. The device of claims 1 to 5, characterized in that the optimal dimensions of the scintillation cell are: diameter about 6 cm, height about 5 cm, and volume about 100 cm$^3$.

7. The device of claims 1 to 6, characterized in that the electronic data processing unit is connected to the monitor by a coxial cable and can be of the self-contained type so that the measuring instrument can be used for long time without eletric power supply.

8. The device of claims 1 to 7, characterized in that the scintillation cell is placed within small cavities of the subsoil at the depth of about 1 meter.

9. A diffusion monitoring device for the measurement of the radon concentration, in particular in the small cavities of the subsoil, according to claims 1 to 8 and as substantially described and illustrated in the annexed drawing.

FIG. 1

FIG. 1B

FIG. 1A

| Input data | Output data |
|---|---|
| Data processing | |
| date | date |
| time | time |
| calibration factor | measurement No. |
| measurement No. | radon conc.(Bq/m$^3$) |
| measuring time | measurement code |

MICROCLIMATE
STATION

T – Ur% – P

INPUT AND/OR OUTPUT DATA TRANSFER

VIA SOFTWARE

PROCESSOR

PERSONAL
COMPUTER

## FIG. 1c

FIG. 2

FIG.3

EP 0 470 054 A2

FIG.4

diffusion monitor average : 14 cpm

Eberline cell average : 13 cpm

cpm

Time (min)

FIG.5

EP 0 470 054 A2

R(t) / R(c)

EP 0 470 054 A2

FIG.6